# DEMANDE DE BREVET EUROPEEN

(11) **EP 1 630 089 A1**
(43) Date de publication de la demande: **01.03.2006**
(21) Numéro de dépôt: 04020130.3
(22) Date de dépôt: 25.08.2004
(51) Int. Cl.: B62M 1/04, B62K 3/00

(54) **Trottinette**

(71) Demandeur: Thomann, Sabine, 1291 Commugny (CH)
(72) Inventeur: Thomann, Sabine, 1291 Commugny (CH); Thomann, Gérald, 1291 Commugny (CH)
(74) Mandataire: Bugnion Genève

(57) **Abrégé**

L'invention concerne une trottinette pliable. Elle est munie un guidon (1) solidaire de l'extrémité supérieure d'un tube (2) dont la partie inférieure est solidaire d'une première fourche (3) supportant l'axe (7) de la roue avant (8). Le tube (2) est monté libre en rotation autour de son axe dans un fourreau (4) fixé à l'une des extrémités d'un support (5) approximativement horizontal. L'autre extrémité du support (5) est solidaire d'une seconde fourche (6) supportant l'axe (9) de la roue arrière (10). Elle est munie d'un dispositif de propulsion (11 à 18) agissant sur la roue arrière (10) actionné par le balancement du poids du corps de l'utilisateur de manière alternée sur ses pieds disposés l'un derrière l'autre sur un élément plat (15).

## Description

La présente invention concerne une trottinette munie d'un châssis comprenant un guidon solidaire de l'extrémité supérieure d'un tube dont la partie inférieure est solidaire d'une première fourche supportant l'axe de la roue avant, ledit tube étant monté libre en rotation autour de son axe dans un fourreau fixé à l'une des extrémités d'un support approximativement horizontal et dont l'autre extrémité est solidaire d'une seconde fourche supportant l'axe de la roue arrière.

La trottinette est un véhicule qui existe depuis de nombreuses décennies et était surtout destinée aux enfants. Vers la fin du siècle passé une trottinette légère, petite, et pliable a été commercialisée destinée au déplacement aussi des adultes. Des trottinettes avec un moteur électrique ou à essence ont vu aussi le jour. Ces dernières sont relativement lourdes, coûteuses et dans certains pays elles ne sont pas conformes aux lois.

La présente invention a pour but de proposer une trottinette améliorée, légère et munie d'un système de propulsion.

La trottinette selon l'invention est caractérisée par le fait qu'elle est munie d'un dispositif de propulsion agissant sur la roue arrière actionné par le balancement du poids du corps de l'utilisateur de manière alternée sur ses pieds disposés l'un derrière l'autre.

L'avantage principal de cette trottinette est le fait qu'elle soit munie d'un dispositif de propulsion qui ne demande pas un grand effort à son utilisateur puisqu'il se contente de balancer le poids de son corps successivement d'un pied à l'autre, les pieds étant disposés l'un derrière l'autre, pour actionner le dispositif de propulsion. Il ne faut pas une force musculaire particulière et le balancement demande très peu d'effort.

Selon une exécution, le dispositif de propulsion comprend un élément plat dimensionné pour que l'utilisateur dispose ses pieds l'un derrière l'autre et muni d'un axe situé transversalement au milieu de l'élément plat, ledit axe étant monté libre en rotation sur un palier solidaire dudit support approximativement horizontal et disposé pour permettre un mouvement rotatif alterné de l'élément plat autour de son axe, un plateau denté dont l'axe est monté sur ledit support, un pignon solidaire de l'axe de la roue arrière, une chaîne assurant la liaison cinématique entre le plateau et le pignon et un moyen assurant une liaison cinématique entre l'élément plat et le plateau et permettant de transformer le mouvement alterné de l'élément plat en mouvement de rotation continue du plateau.

Ainsi, l'utilisateur en balançant le poids de son corps en avant et en arrière il fait pivoter l'élément plat sur lequel ses pieds reposent, et ce pivotement est transformé par une bielle à un mouvement de rotation continue d'un plateau lié cinématiquement à un pignon qui entraîne la roue arrière de la trottinette comme pour un vélo. Le dispositif de propulsion est quasiment identique à celui d'un vélo sauf que l'entraînement ne se base pas essentiellement sur un effort musculaire mais à la gravitation puisque c'est le poids du corps qui entraîne l'élément plat.

Des variantes d'exécution sont définies dans les revendications dépendantes. Ainsi, le châssis ( tube et support approximativement horizontal) est pliable, la trottinette peut être munie d'un changement des vitesses et un système de freinage est prévu.

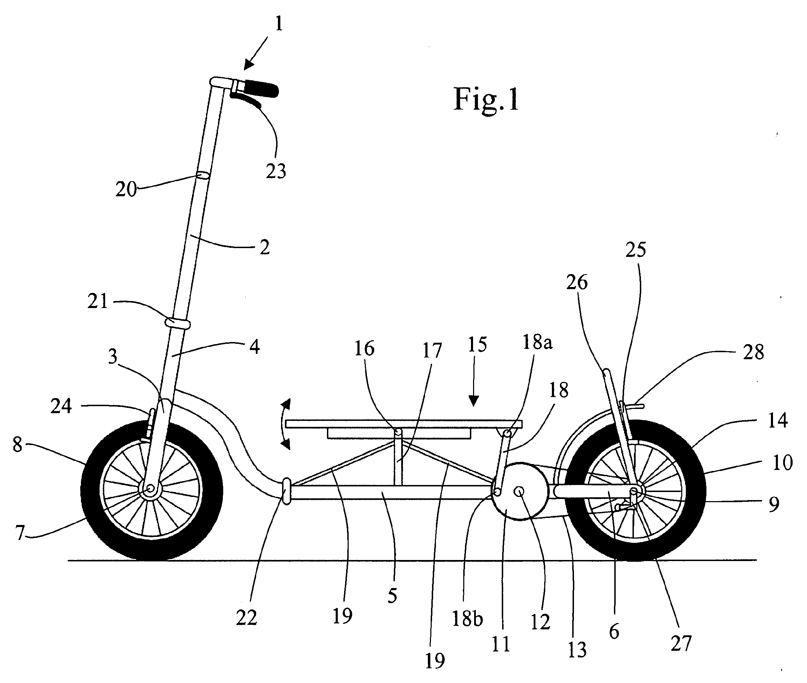

L'invention sera décrite plus en détail à l'aide du dessin annexé illustrant schématiquement une exécution préférée d'une trottinette selon l'invention.

La figure unique représente vu de côté une trottinette munie de l'ensemble des caractéristiques revendiquées.

La trottinette comprend un guidon 1 monté sur un tube 2 approximativement vertical dont l'extrémité inférieure est solidaire d'une première fourche 3. l'axe 7 de la roue avant 8 est montée sur ladite fourche 3. Le tube 2 est logé dans un fourreau 4 solidaire d'un support 5 approximativement horizontal. Le support 5 et le tube 2 forment le châssis de la trottinette. L'extrémité postérieure du support 5 est munie d'une seconde fourche 6. L'axe 9 de la roue arrière 10 est supportée par la seconde fourche 6. Le support 5 peut être aussi un tube.

Le dispositif de propulsion comprend un élément plat 15 muni d'un axe 16 reposant dans un palier 17, une bielle 18 agissant sur un point excentré d'un plateau 11, un pignon 14 solidaire de l'axe 9 de la roue arrière 10 et d'une chaîne 13 liant cinématiquement le plateau 11 au pignon 14. Le palier 17 est formé par un tube ou une tige et deux croisillons 19 solidaires du support 5.Une plaque triangulaire dont la pointe supporte l'axe 16 enfin de mieux repartir le poids de l'utilisateur sur le support 5 peut aussi être utilisée au lieu du tube et croisillons. La bielle 18 est articulée d'une part par un pivot 18a à l'extrémité de l'élément plat 15 et d'autre part par un autre pivot 18b à un point excentré du plateau 11. La longueur de la bielle 18 et la position du pivot 18b sont calculées pour permettre que le basculement de l'élément plat 15, selon la double flèche, se transforme en rotation continue du plateau 11. Le plateau 11 est monté libre en rotation sur un axe 12 solidaire du support 5.

Au lieu d'un simple pignon 14, un pignon multiple peut être installé pour modifier le rapport entre le pignon 14 et le plateau 11, le changement se faisant au moyen d'un dérailleur 27 commandé par un organe situé sur le guidon 1 de manière conventionnelle.

Un système de freinage est aussi prévu. Le freinage est commandé par une ou deux poignées 23 situées sur le guidon 1 pour actionner les freins 24, 25 agissant sur les roues 8 et 10.

Le tube 2 comprend une partie télescopique pour permettre de régler sa hauteur un écrou 20 permettant de le bloquer à la position voulue.

Le tube 2 et le support approximativement horizontal 2 5 sont munis de deux dispositifs à charnière ou similaire 21 et 22 permettant de les plier pour réduire le volume et pouvoir loger la trottinette dans une voiture ou un sac etc.

La roue arrière 10 est munie d'un garde boue 28 fixé entre la fourche 6 et un tube plié 26 qui sert aussi de poignée de préhension.

Une béquille ou similaire peut être fixée sur la fourche arrière pour tenir en équilibre la trottinette.

Les freins agissant sur les deux roues peuvent être des freins à tambour et le châssis peut aussi être muni d'une suspension par des moyens conventionnels.

## Revendications

1. Trottinette munie d'un châssis comprenant un guidon (1) solidaire de l'extrémité supérieure d'un tube (2) dont la partie inférieure est solidaire d'une première fourche (3) supportant l'axe (7) de la roue avant (8), ledit tube (2) étant monté libre en rotation autour de son axe dans un fourreau (4) fixé à l'une des extrémités d'un support (5) approximativement horizontal et dont l'autre extrémité est solidaire d'une seconde fourche (6) supportant l'axe (9) de la roue arrière (10), **caractérisée par le fait qu'**elle est munie d'un dispositif de propulsion (11 à 18) agissant sur la roue arrière (10) actionné par le balancement du poids du corps de l'utilisateur de manière alternée sur ses pieds disposés l'un derrière l'autre.

2. Trottinette selon la revendication 1, **caractérisée par le fait que** le dispositif de propulsion comprend un élément plat (15) dimensionné pour que l'utilisateur dispose ses pieds l'un derrière l'autre et muni transversalement d'un axe (16) situé au milieu de l'élément plat (15), ledit axe (16) étant monté libre en rotation sur un palier (17) solidaire dudit support (5) approximativement horizontal et disposé pour permettre un mouvement rotatif alterné de l'élément plat (15) autour de son axe (16), un plateau denté (11) dont l'axe (12) est monté sur ledit support (5), un pignon (14) solidaire de l'axe (9) de la roue arrière (10), une chaîne (13) assurant la liaison cinématique entre le plateau (11) et le pignon (14) et un moyen (18) assurant une liaison cinématique entre l'élément plat (5) et le plateau et permettant de transformer le mouvement alterné de l'élément plat (15) en mouvement de rotation continue du plateau (11).

3. Trottinette selon la revendication 2, **caractérisée par le fait que** ledit moyen (18) est une bielle articulée par une extrémité à un pivot (18b) excentré du plateau (11) et par l'autre extrémité à un pivot (18a) solidaire de l'élément plat (15).

4. Trottinette selon l'une des revendications 2 ou 3, **caractérisée par le fait que** l'elle munie d'un système de freinage (23, 24, 25) agissant sur le deux roues (8, 10).

5. Trottinette selon l'une des revendications 1 à 4, **caractérisée par le fait que** dispositif de propulsion est muni d'un dispositif de changement de vitesse (27).

6. Trottinette selon l'une des revendications 1 à 5, **caractérisée par le fait que** ledit support (5) et ledit tube (2) sont munis d'un moyen (22, 21) permettant de les plier pour réduire le volume de la trottinette.

7. Trottinette selon l'une des revendications 1 à 6, **caractérisée par le fait que** le dit tube (2) comprend une partie télescopique bloquée par un moyen (20) pour permettre son ajustement en hauteur.
